# EUROPEAN PATENT APPLICATION

(11) **EP 1 732 002 A1**
(43) Date of publication of application: **13.12.2006**
(21) Application number: 06011402.2
(22) Date of filing: 01.06.2006
(51) Int. Cl.: G06F 9/46

(54) **Calculating module runtimes on multiple platforms**

(30) Priority: 10.06.2005 US 149997
(71) Applicant: SAP AG, 69190 Walldorf (DE)
(72) Inventor: Nagel, Klaus, 69115 Heidelberg (DE); Biedenstein, Stefan, 76669 Bad Schoenborn (DE); Graf, Arnd, 67354 Roemerberg (DE)
(74) Representative: Müller-Boré & Partner Patentanwälte

(57) **Abstract**

Runtimes of a plurality of modules executed on at least two platforms may be determined by appending a start event to a stack of events when each module is executed on a first platform. The appended start event may be closed when execution of the corresponding executed module is terminated. Subsequently, a runtime may be determined for the module based on at least when the appended start event is closed. Data may then be transmitted to a second platform that includes runtimes of each of the modules executed on the first platform. The data may be transmitted when execution of modules ceases on the first platform and/or when execution of modules commences on the second platform.

## Description

### TECHNICAL FIELD

The subject matter described herein relates to the calculation of module runtimes on multiple platforms.

### BACKGROUND

Applications are being increasingly run on several different software platforms. For example, a single application may include modules that are executed in JAVA, .NET, and the like on a front-end (e.g., graphical user interface) for user interaction, and modules that are executed in C/C++ or Advanced Business Application Programming (ABAP) and the like for back-end processing. In order to identify and characterize performance problems associated with the operation of the application, and additionally to monitor application load, the runtime of each of module must be determined.

As clocks typically differ for each of the platforms (or are not otherwise synchronized), the runtime of each of the modules cannot be determined by collecting time stamps for all of the modules. Alternatively, a software platform could be configured to transmit a signal identifying a particular module and indicating whether execution of such module has commenced or terminated. However, the amount of resources (e.g., bandwidth, processing, etc.) required to continually exchange performance metrics data between platforms makes such an approach unfeasible.

### SUMMARY

In one aspect, a method determine runtimes of a plurality of modules executed on each of at least two platforms (e.g., platforms with non-synchronized clocks). A start event is appended to a stack of events when each module on a first platform is executed. The start event may be used to identify the executed module. Each appended start event in the stack of events is closed when execution of the corresponding module is terminated. Runtimes for each of the modules are determined based on at least when the corresponding appended start event is closed. Data including the runtimes of each of the modules executed on the first platform is transmitted to a second platform when execution of modules ceases on the first platform.

In some variations, the method may automatically determine a runtime by determining, for a first module on the first platform, the difference between a first amount of elapsed time between an appending of the start event for the first module and a closing of the appended start event for the first module and runtimes for any other modules executed during the first amount of elapsed time. In such a variation, the method may further comprise determining, for a second module on the first platform, the difference between a second amount of elapsed time between an appending of the start event for the second module and a closing of the appended start event for the second module (that falls within the first amount of time) and runtimes for any other modules executed during the second amount of elapsed time other than the first module.

The method may include appending a start event to a stack of events when each module on a third platform is executed, closing each appended start event in the stack of events when execution of the corresponding module is terminated, automatically determining a runtime for each of the modules when the appended start event is closed, and transmitting data to the second platform including the runtimes of each of the modules executed on the third platform when execution of modules ceases on the third platform. Additionally or in the alternative, the method may further comprise executing a plurality of modules on the second platform, automatically determining runtimes for each of the modules executed on the second platform, executing an additional plurality of modules on the first platform, automatically determining runtimes for each of the additional modules executed on the first platform, and transmitting data to the second platform including the runtimes of each of the additional modules executed on the second platform when execution of the additional modules on the first platform terminates. With the latter variation, the method may also comprise storing the runtimes of each of the modules executed on the first and second platforms.

In yet other variations, the method may further comprise accumulating all times that are not assigned to a module between a first appended start event and when execution of modules on the first platform ceases. These accumulated times may be transmitted to the second platform when execution of modules ceases on the first platform.

The method may operate in connection with an application that executes at least one module on each of a plurality of platforms in sequence (e.g., three modules are executed on a first platform, followed by five modules being executed on a second platform, followed by two modules being executed on a third platform, followed by six modules being executed on the second platform, etc.). The application may pertain to a variety of tasks including a query of a data warehouse.

In another aspect, an apparatus to determine runtimes of a plurality of modules executed on at least two platforms may comprise a monitoring unit, a calculation unit, and a transmitter. The monitoring unit may be operable to append a start event to a stack of events when each module on a first platform is executed. Such a start event may identify the executed module. The monitoring unit may also close each appended start event in the stack of events when execution of the corresponding module is terminated. The calculation unit is operable to determine a runtime for each of the modules based on at least when the corresponding appended start event is closed. The transmitter is operable to transmit data to a second platform including the runtimes of each of the modules executed on the first platform when execution of modules ceases on the first platform. Optionally, the apparatus may be coupled to a data repository to store data pertaining to the runtimes of the measured modules.

In yet another aspect, an interrelated method for determining runtimes of a plurality of modules executed on each of a plurality of platforms (with one of the platforms being designated a master platform) may comprise calculating, for each platform, runtimes for each of a series of executed modules, and transmitting data including the calculated runtimes to the master platform when execution of modules ceases on each platform other than the master platform.

In still another aspect, a further interrelated method for determining runtimes of at least one module executed on at least one platform may comprise executing at least one module on a first platform, calculating, for at least one executed module, a runtime based on a difference between (i) an amount of time equal elapsed from a start and a stop of the execution of the module and (ii) aggregate runtimes for any intervening nested modules executed during the execution of the module, and transmitting data to a second platform including the calculated runtimes when execution of the at least one module ceases on the first platform.

A further interrelated method may comprise determining if a call by an application to a first platform supports transportation of statistic information regarding runtimes of executed modules and elapsed times of modules that are currently being executed on a second platform to the first platform, transporting the statistics information using a program running in connection with the first call, or initiating a second call to the first platform that supports transport of statistics information and transporting the statistics information using a program running in connection with the second call.

Computer program products, which may be embodied on computer readable-material, are also described. Such computer program products may include executable instructions that cause a computer system to conduct one or more of the method acts described herein.

Similarly, computer systems are also described that may include a processor and a memory coupled to the processor. The memory may encode one or more programs that cause the processor to perform one or more of the method acts described herein.

The subject matter described herein provides many advantages. For example, more accurate estimates of resource consumption and runtimes associated with modules executed on each of several platforms may be provided. Such information may be used to monitor load on systems and to detect sources of increased query runtime (e.g., front-end problems, database access, slow communications, etc.) including individual runtimes for measured modules.

The details of one or more variations of the subject matter described herein are set forth in the accompanying drawings and the description below. Other features and advantages of the subject matter described herein will be apparent from the description and drawings, and from the claims.

### DESCRIPTION OF DRAWINGS

FIG. 1 is a process flow diagram illustrating a method for determining runtimes of a plurality of modules executed on at least two platforms;

FIG. 2 is a schematic illustrating an apparatus to determine runtimes of a plurality of modules executed on at least two platforms;

FIG. 3 is a process flow diagram illustrating the execution of multiple modules on a single platform and the generation of an associated call stack useful for understanding and implementing the subject matter described herein;

FIG. 4 is a process flow diagram illustrating the execution of multiple modules on multiple platforms useful for understanding and implementing the subject matter described herein; and

FIG. 5 is a process flow diagram illustrating a transfer of statistics from a non-master (or secondary) platform to a master platform useful for understanding and implementing the subject matter described herein.

Like reference symbols in the various drawings indicate like elements.

### DETAILED DESCRIPTION

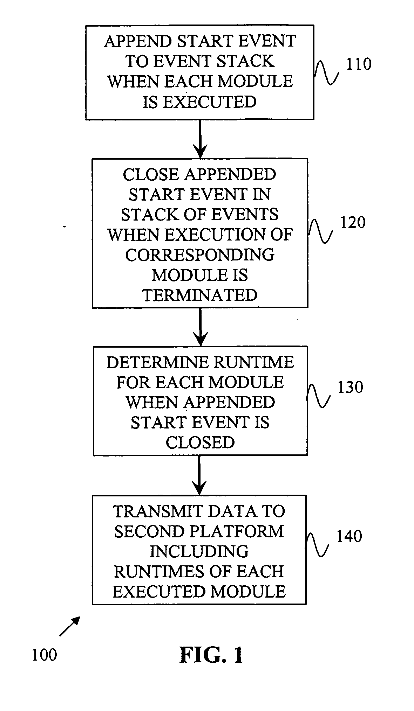

FIG. 1 illustrates a method 100 for determining runtimes of a plurality of modules executed on at least two platforms (e.g., software platforms which may be heterogeneous). A start event is appended, at step 110, to a stack of events when each module on a first platform is executed (or otherwise initiated). The start event may identify the executed module and/or indicate that the execution of a module has commenced. Subsequently, at step 120, each appended start event in the stack of events is closed when execution of the corresponding module is terminated (or otherwise ended). At step 130, a runtime for each of the modules is determined (for example, by a processor) based, at least in part, on when the appended start event is closed. Data is transmitted to a second platform, at step 140, when execution of modules ceases on the first platform and/or commences on the second platform. The transmitted data may include the runtimes of each of the modules executed on the first platform.

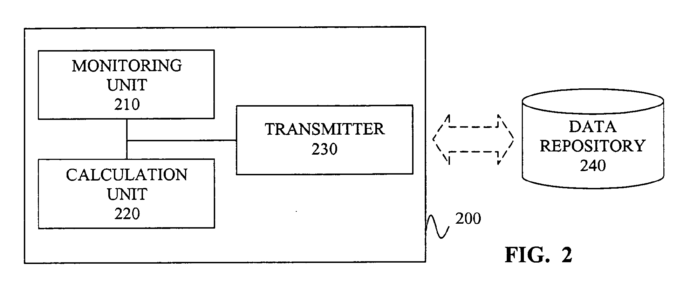

FIG. 2 illustrates an apparatus 200 to determine runtimes of a plurality of modules executed on at least two platforms (e.g., heterogeneous platforms). The apparatus includes a monitoring unit 210, a calculation unit 220, and a transmitter 230. The monitoring unit 210 is operable to append a start event to a stack of events when each module is executed on a first platform. The start event is any indicator which identifies the executed module and is closed when execution of the corresponding initiated module is terminated. The calculation unit 220 is operable to determine a runtime for each of the modules based on, at least in part, when the corresponding appended start event is closed (i.e., the calculation unit determines runtimes based, in part, on the time in between the time at which the start event is appended to the stack of events and the time at which the start event is closed). The transmitter 230 is operable to transmit data to a second platform including the runtimes of each of the modules executed on the first platform when execution of modules ceases on the first platform and/or commences on the second platform. Optionally, in some variations, the apparatus 200 is coupled to a data repository 240 which may be used to store the stack of events, timing information for each executed module, and the like.

The following provides useful information for understanding and implementing the subject matter described herein as well as optional variations that may be implemented singly or in combination depending on the desired configuration.

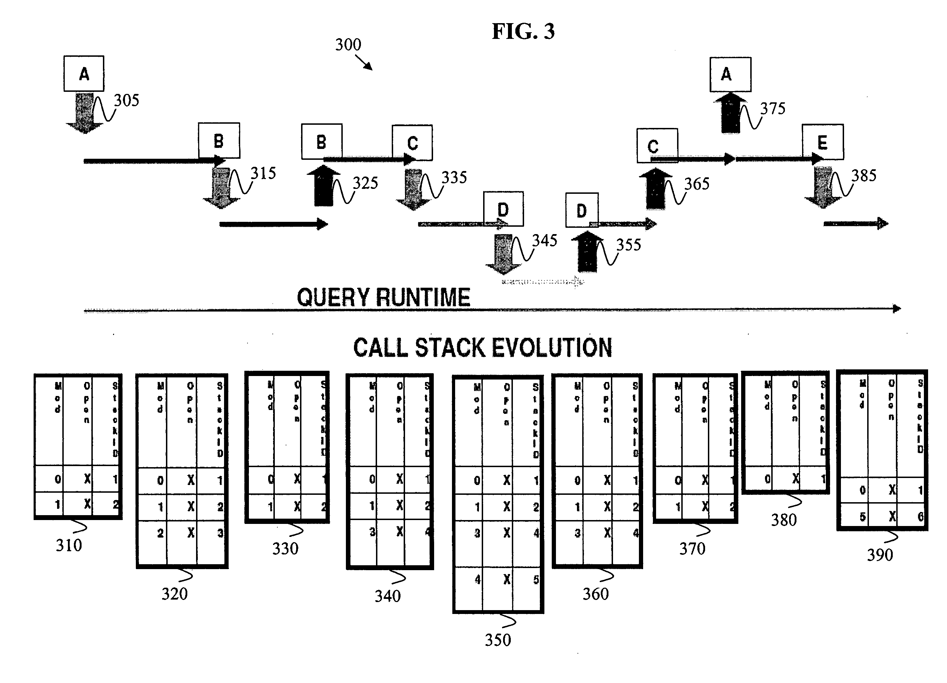

FIG. 3 is a process flow diagram 300 illustrating a plurality of modules A, B, C, D, E executed on a single platform during the runtime of an application across multiple platforms. The process flow diagram 300 also illustrates various stages of a call stack (or a stack of events) stored in a memory device during execution of modules A, B, C, D, E on the platform.

The application may comprise, for example, a business intelligence query of a data repository. Such a query might include reading transaction data from a data repository, processing and analyzing the data in an online analytical processing (OLAP) engine, reading the master, checking any authorizations pertaining to the data, and passing the results to a front end platform that renders web items or formats cells (depending on the desired display format). As each of these tasks may includes modules executed on a differing platforms (e.g., JAVA and .NET for front-end components and C/C++ and advanced business application programming (ABAP) for back-end components), the runtimes for the modules on the differing platforms may be determined separately.

The downward pointing arrows designate the initiation of execution of each of the modules A, B, C, D, E and the upward pointing arrows designate the termination of the execution of each of the modules A, B, C, D, E. The amount of time in between the downward pointing arrow and the upward pointing arrow for a particular module is used to determine the runtime. In some cases, modules being executed include further nested modules being executed. For example, between a start event 305 and an end event 375 of module A, there is a start event 315 and an end event 325 for nested module B, a start event 335 and an end event 365 for nested module C. Moreover, during execution of module C, there is a start event 345 and an end event 355 for nested module D. In order to determine the runtime of module A, the runtimes of each of modules B, C, and D must be determined and subtracted from an amount of time between the start event 305 and the end event 375 for module A.

At the start of each modules that is measured for runtime statistics, a start event 305, 315, 335, 345, 385 may be sent. These start events 305, 315, 335, 345, 385 are appended to a stack of events with a unique identifier with the status "open". Stages of the stack of events (call stack) 310, 320, 340, 350, 390 respectively correspond to the start events 305, 315, 335, 345, 385.

When the start event 305 for module A is appended to the stack of events 310, module A is assigned '1' as a unique designator, 'X' indicating that the module A is open, and optionally a StackID '2' which is used for indicating relative placement within the stack of events. When execution of module B is initiated, start event 315 is appended to the stack of events and module B is assigned '2' as a unique designator, an 'X' and optionally StackID '3'. When execution of module B ends or is otherwise terminated, an end event 325 causes the start event 315 to be deleted from the stack of events 330. Start event 335 corresponding to module C is appended to the stack of events 340 and is assigned module '3' as a unique identifier, 'X' indicating that the module B is open, and optionally a StackID '4'.

Subsequently, start event 345 corresponding to module d is appended to the stack of events 350 and is assigned module '4' as a unique identifier, 'X' indicating that the module B is open, and optionally a StackID '5'. When execution of module D ends or is otherwise terminated, an end event 355 causes the start event 345 to be deleted from the stack of events 360. In addition, when execution of module C ends or is otherwise terminated, an end event 365 causes the start event 335 to be deleted from the stack of events 370.

Further, when execution of module A ends or is otherwise terminated, an end event 375 causes the start event 305 to be deleted from the stack of events 380. Optionally, additional modules, such as module E may be executed causing start event 385 to be appended to stack of events 390 so that module E is assigned '5' as a unique designator, 'X' indicating that the module A is open, and optionally a StackID '6'. Thereafter, the execution of further modules may be executed and ended until the application begins executing modules on a next platform within a sequence of platforms.

Each change in the stack of events 310, 320, 330, 340, 350, 360, 370, 380, 390 may be used to determine the runtime of each module A, B, C, D, E. If a second module is initiated with a start event before a subsequently initiated start event of a first module is closed, the time elapsed between the two start events is added to the first module (e.g., module D is executed during module C). If the second module is closed with an end event, the time between the start and end events for the second module are added to the second module and the event is deleted from the stack of events so the only open module is the first module. Such an arrangement ensures that there is no span of time which is used to calculate runtimes of more than one module.

In some variations, the first start event 305 may trigger a special event "not assigned times". This special event is always open and may be assigned '0' as a unique designator, 'X' indicating that the module A is open, and optionally a StackID '1' in each stage of the stack of events for a certain platform. Therefore, the "not assigned times" special event may be used to verify that the individual runtimes of each of the executed modules A, B, C, D, E do not exceed the total runtime on a particular platform. Moreover, if the "not assigned times" special event exceeds a certain threshold, then an indication may be provided to a systems administrator that refinements may be needed to the statistics recording process.

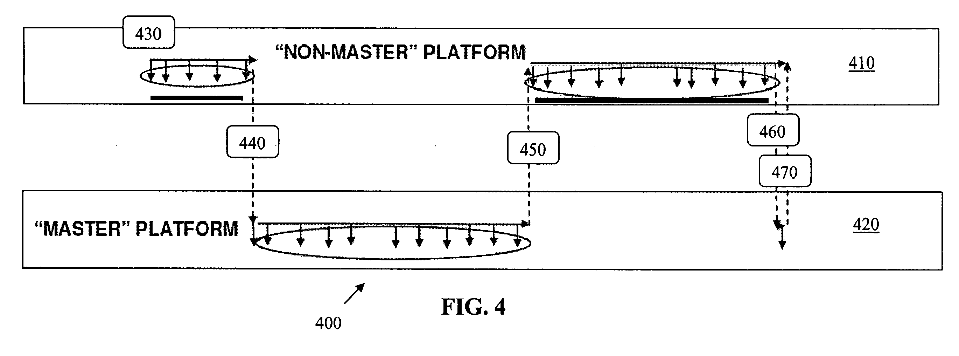

With reference to FIG. 4, a process flow diagram 400 illustrates an application that includes modules that are executed on a non-master (or secondary) platform 410 and a master platform 420. As used herein, master platform 420 refers to a platform that collects and/or stores performance statistics (e.g., runtimes) regarding the execution of modules on one or more platforms. At step 430, control of the application process begins with the non-master platform 410 which executes a first series of modules. The runtime of each of the modules in the first series is recorded (e.g., record (*t*_{*1*} (Mod.1) ... *t*_{*n*} (Mod. N)). Once the execution of these modules is finalized, data indicating the runtimes of each the modules in the first series is passed on (or otherwise provided), at step 440, in a single call to the master platform 420. In addition, control of the process is transferred from the non-master platform 410 to the master platform 420.

Once control is transferred, a start time is calculated on the master platform 420 (e.g., start time = current time - 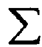 *t*_{*i*}). The master platform 420 then stores the module runtimes passed en masse in a data repository or memory storage device and executes modules and subsequently passes control back to the non-master platform 410. The non-master platform 410 executes a second series of modules, records the runtimes of each of these modules (e.g., record (*t*_{*1A*} (Mod.1) ... *t*_{*nB*} (Mod. N)) and, at step 460, passes on data indicating the runtimes of each these modules to the master platform 460. The master platform then stores these recorded times (for example, in a coupled data repository or a memory device), and optionally, compensates for any variations due to time required to communicate the data from the non-master platform 410 to the master platform 420 (e.g., network time = Δ (current time - 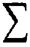 *t*_{*i*}) - last measured time). Control of the process is then returned, at step 470, to the non-master platform.

Although only two platforms are illustrated, it will be appreciated that multiple platforms may be utilized with one of the platforms being designated a master platform. With such an arrangement, each non-master platform would provide data indicating the module runtimes to the master platform each time control of the process is switched to another platform. Moreover, it will be appreciated that platforms may execute modules in parallel so that each platform transmits data to the master platform after ceasing to execute modules (and/or control of the process passes to another platform).

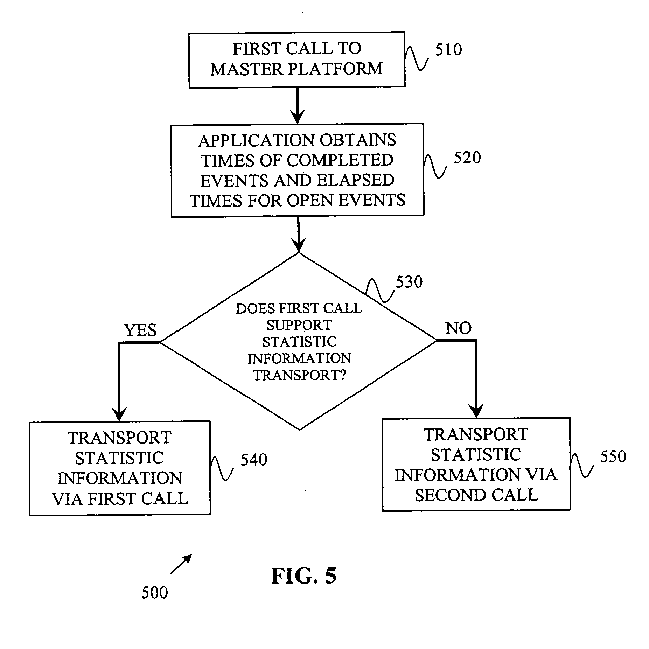

FIG. 5 illustrates a process 500 by which statistics regarding module runtimes and/or elapsed times for open events (e.g., modules that are still being executed) are transferred from a non-master or secondary platform (e.g., JAVA, etc.) to a master platform that collects and/or stores performance statistics and optionally additional data from one or more secondary platforms. The secondary platform may include a statistics manager that receives start and end events concerning the secondary platform and uses such information to determine module runtimes.

At step 510, an application initiates a first call to a master platform. The call may be part of an overall process being performed by the application (e.g., change of platform as part of a query of a database) or it may be a call related substantially to the reporting of the performance statistics of a secondary platform. The application, at step 520, obtains the runtimes for executed modules and elapsed times for modules that are still being executed from a statistic manager associated with the secondary platform. Subsequently, it is determined, at step 530, whether the first call supports the transport of statistics information. If that is the case, at step 540, the statistic information is transported using a program running in connection with the first call. Otherwise, at step 550, a separate call (e.g., second call) is initiated that transports the statistic information to the master platform prior to the first call. If the application that is running is controlled by the secondary platform, the application framework submits any statistics information not previously communicated to the master system after completion of a user interaction step.

With the process 500 of FIG. 5, the master platform may store absolute times for executed modules and the secondary platform(s) measures elapsed times for modules that are still being executed (e.g., events still pending in a stack of events, etc.). These elapsed times may be used to determine the runtimes of any modules which complete execution in between calls to the master platform. Moreover, the time between two calls to the master system (e.g., call handing over control to a non-master platform and call pursuant to which master platform regains control) may be used to determine or estimate network and communication delays between the secondary platform(s) and the master platform.

Various implementations of the subject matter described herein may be realized in digital electronic circuitry, integrated circuitry, specially designed ASICs (application specific integrated circuits), computer hardware, firmware, software, and/or combinations thereof. These various implementations may include implementation in one or more computer programs that are executable and/or interpretable on a programmable system including at least one programmable processor, which may be special or general purpose, coupled to receive data and instructions from, and to transmit data and instructions to, a storage system, at least one input device, and at least one output device.

These computer programs (also known as programs, software, software applications or code) include machine instructions for a programmable processor, and may be implemented in a high-level procedural and/or object-oriented programming language, and/or in assembly/machine language. As used herein, the term "machine-readable medium" refers to any computer program product, apparatus and/or device (e.g., magnetic discs, optical disks, memory, Programmable Logic Devices (PLDs)) used to provide machine instructions and/or data to a programmable processor, including a machine-readable medium that receives machine instructions as a machine-readable signal. The term "machine-readable signal" refers to any signal used to provide machine instructions and/or data to a programmable processor.

To provide for interaction with a user, the subject matter described herein may be implemented on a computer having a display device (e.g., a CRT (cathode ray tube) or LCD (liquid crystal display) monitor) for displaying information to the user and a keyboard and a pointing device (e.g., a mouse or a trackball) by which the user may provide input to the computer. Other kinds of devices may be used to provide for interaction with a user as well; for example, feedback provided to the user may be any form of sensory feedback (e.g., visual feedback, auditory feedback, or tactile feedback); and input from the user may be received in any form, including acoustic, speech, or tactile input.

The subject matter described herein may be implemented in a computing system that includes a back-end component (e.g., as a data server), or that includes a middleware component (e.g., an application server), or that includes a front-end component (e.g., a client computer having a graphical user interface or a Web browser through which a user may interact with an implementation of the subject matter described herein), or any combination of such back-end, middleware, or front-end components. The components of the system may be interconnected by any form or medium of digital data communication (e.g., a communication network). Examples of communication networks include a local area network ("LAN"), a wide area network ("WAN"), and the Internet.

The computing system may include clients and servers. A client and server are generally remote from each other and typically interact through a communication network. The relationship of client and server arises by virtue of computer programs running on the respective computers and having a client-server relationship to each other.

Although a few variations have been described in detail above, other modifications are possible. For example, the logic flow depicted in the accompanying figures and described herein do not require the particular order shown, or sequential order, to achieve desirable results. Other embodiments may be within the scope of the following claims.

## Claims

1. A computer-implemented method for determining runtimes of a plurality of modules executed on each of least two platforms, the method comprising:
automatically appending a start event to a stack of events when each module on a first platform is executed, the start event identifying the executed module;
automatically closing each appended start event in the stack of events when execution of the corresponding module is terminated;
automatically determining a runtime for each of the modules based on at least when the corresponding appended start event is closed; and
transmitting data to a second platform including the runtimes of each of the modules executed on the first platform when execution of modules ceases on the first platform.

2. A method as in claim 1, wherein the automatically determining a runtime comprises: determining, for a first module on the first platform, the difference between a first amount of elapsed time between an appending of the start event for the first module and a closing of the appended start event for the first module and runtimes for any other modules executed during the first amount of elapsed time.

3. A method as in claim 2, wherein the automatically determining a runtime further comprises: determining, for a second module on the first platform, the difference between a second amount of elapsed time between an appending of the start event for the second module and a closing of the appended start event for the second module and runtimes for any other modules executed during the second amount of elapsed time other than the first module, wherein the second amount of elapsed time falls within the first amount of elapsed time.

4. A method as in anyone of the preceding claims, further comprising:
appending a start event to a stack of events when each module on a third platform is executed;
closing each appended start event in the stack of events when execution of the corresponding module is terminated;
automatically determining a runtime for each of the modules when the appended start event is closed; and
transmitting data to the second platform including the runtimes of each of the modules executed on the third platform when execution of modules ceases on the third platform.

5. A method as in anyone of the preceding claims, further comprising:
executing a plurality of modules on the second platform;
automatically determining runtimes for each of the modules executed on the second platform;
executing an additional plurality of modules on the first platform;
automatically determining runtimes for each of the additional modules executed on the first platform; and
transmitting data to the second platform including the runtimes of each of the additional modules executed on the second platform when execution of the additional modules on the first platform terminates.

6. A method as in claim 5, further comprising: storing the runtimes of each of the modules executed on the first and second platforms.

7. A method as in anyone of the preceding claims further comprising accumulating all times that are not assigned to a module between a first appended start event and when execution of modules on the first platform cease.

8. A method as in claim 7, further comprising: transmitting data including the accumulated times to the second platform when execution of modules ceases on the first platform.

9. A method as in anyone of the preceding claims, wherein the modules are executed in response to a query of a data warehouse.

10. An apparatus to determine runtimes of a plurality of modules executed on each of at least two platforms, the apparatus comprising:
a monitoring unit to append a start event to a stack of events when each module on a first platform is executed, the start event identifying the executed module, and to close each appended start event in the stack of events when execution of the corresponding module is terminated;
a calculation unit to determine a runtime for each of the modules based on at least when the corresponding appended start event is closed; and
a transmitter to transmit data to a second platform including the runtimes of each of the modules executed on the first platform when execution of modules ceases on the first platform.

11. An apparatus as in claim 10, further comprising: a data repository to store the data transmitted to the second platform.

12. An apparatus as in claim 10 or 11 wherein the calculation unit determines, for a first module on the first platform, the difference between a first amount of elapsed time between an appended start event for the first module and a closing of the appended start event for the first module and runtimes for any other modules executed during the first amount of elapsed time.

13. An apparatus as in claim 12, wherein the calculation unit determines, for a second module on the first platform, the difference between a second amount of elapsed time between an appended start event for the second module and a closing of the appended start event for the second module and runtimes for any other modules executed during the second amount of elapsed time other than the first module, wherein the second amount of elapsed time falls within the first amount of elapsed time.

14. An apparatus as in anyone of claims 11 to 13, wherein:
the monitoring unit appends a start event to a stack of events when each module on a third platform is executed and closes each appended start event in the stack of events when execution of the corresponding module is terminated;
the calculation unit determines a runtime for each of the modules when the appended start event is closed; and
the transmitter transmits data to the second platform including the runtimes of each of the modules executed on the third platform when execution of modules ceases on the third platform.

15. An apparatus as in anyone of claims 11 to 14, wherein:
the monitoring unit automatically determines runtimes for each of module executed on the second platform and for each of an additional plurality of modules executed on the first platform subsequent to the execution of the modules on the second platform;
the calculation unit determines runtimes for each of the additional plurality of modules executed on the first platform; and
the transmitted transmits data to the second platform including the runtimes of each of the additional plurality of modules executed on the second platform when execution of the additional plurality of modules on the first platform ceases.

16. An apparatus as in anyone of claims 11 to 15, wherein the monitoring unit accumulates all times that are not assigned to a module between a first appended start event and when execution of modules on the first platform cease.

17. An apparatus as in claim 16, wherein the transmitter transmits data including the accumulated times to the second platform when execution of modules ceases on the first platform. anyone of claims 11 to 17,

18. An apparatus as in further comprising a data warehouse for providing results in response to a query.

19. A computer-implemented method for determining runtimes of a plurality of modules executed on each of a plurality of platforms, wherein one of the platforms is designated a master platform, the method comprising:
calculating, for each platform, runtimes for each of a series of executed modules; and
transmitting data including the calculated runtimes to the master platform when execution of modules ceases on each platform other than the master platform.

20. A computer-implemented method for determining runtimes of at least one module executed on at least one platform, the method comprising:
executing at least one module on a first platform;
calculating, for at least one executed module, a runtime based on a difference between (i) an amount of time equal elapsed from a start and a stop of the execution of the module and (ii) aggregate runtimes for any intervening nested modules executed during the execution of the module; and
transmitting data to a second platform including the calculated runtimes when execution of the at least one module ceases on the first platform.
